# EUROPÄISCHE PATENTANMELDUNG

(11) **EP 4 167 409 A1**
(43) Veröffentlichungstag der Anmeldung: **19.04.2023**
(21) Anmeldenummer: 21202305.5
(22) Anmeldetag: 12.10.2021
(51) Int. Cl.: H02G 3/06, H02G 1/08, G02B 6/44, H02G 3/04

(54) **SYSTEM ZUR AUFNAHME (ELEKTRISCHER) LEITUNGEN UND VERFAHREN ZUM BETREIBEN EINES SOLCHEN SYSTEMS, SOWIE EINE VORRICHTUNG FÜR DIESES VERFAHREN, INFORMATIONSTRÄGER AUFWEISENDE LEERDOSEN UND LEERROHRE**

(71) Anmelder: Janico Holding AG, 8500 Frauenfeld (CH)
(72) Erfinder: Reutimann, Julien Stefan, 8570 Weinfelden (CH); López, Marcos, 8268 Salenstein (CH); Flury, Peter, 6475 Ballwil (CH)
(74) Vertreter: Spiller, Erasmo

(57) **Zusammenfassung**

Die vorliegende Erfindung betrifft ein System zur Aufnahme (elektrischer) Leitungen und ein Verfahren zum Betreiben eines solchen Systems. Weiterhin betrifft die vorliegende Erfindung Informationsträger aufweisende Leerdosen und Leerrohre sowie ein auf solche Leerdosen und Leerrohre gerichtetes Herstellungsverfahren. Weiterhin betrifft die vorliegende Erfindung eine Vorrichtung für das erfindungsgemäße Verfahren zum Betreiben eines Systems zur Aufnahme (elektrischer) Leitungen.

## Beschreibung

### Technisches Gebiet

Die vorliegende Erfindung betrifft ein System zur Aufnahme (elektrischer) Leitungen und ein Verfahren zum Betreiben eines solchen Systems. Weitergehend betrifft die vorliegende Erfindung Informationsträger aufweisende Leerdosen und Leerrohre sowie eine Vorrichtung für dieses Verfahren. Ein herkömmliches Leerrohr in Form eines Wellrohrs wird bspw. in DE 10 2017 209 509 beschrieben. Leerdosen dienen bei der Elektroinstallation in Kombination mit Leerrohren, resp. Wellrohren der geordneten Verlegung und Befestigung von (elektrischen) Leitungen, als Kabelschutz sowie zur Vorbereitung einer späteren Auswechselung oder Nachinstallation solcher Leitungen. Ader- und Steuerleitungen, Antennen-, Netzwerk- und Telefonkabel werden üblicherweise in Leerrohren verlegt, um diese zu schützen und nachträglich auswechseln zu können. Kommunikationstechnische Leitungssysteme werden aufgrund des technischen Fortschritts und damit verbundener wechselnder Anforderungen in der Regel öfter erneuert und angepasst, als die übrige Installation. Es ist daher bei der Gebäudeplanung notwendig, bereits ein für künftige Entwicklungen geeignetes System zur Elektrifizierung bereitzustellen. Neben dem Einsatz in der Elektroinstallation werden in der Heizungs- und Sanitärinstallation Leerrohre zum Schutz von Rohrleitungen vor Korrosion sowie vor mechanischer Beschädigung von Kunststoffrohren eingesetzt.

Im Sinne der vorliegenden Erfindung handelt es sich bei einer wenigstens einen Informationsträger aufweisenden Leerdose um eine markierte Leerdose und die Bezeichnungen Informationsträger aufweisende Leerdose und markierte Leerdose sind synonym zu verstehen. Die in der vorliegenden Erfindung beschriebenen Leerdosen können als Verteilerpunkte bzw. Verteilerkästen für Wellrohre dienen, indem sie als Start-/Endpunkt über Wellrohre miteinander verbunden sind. Ähnliche Leerdosen sind aus dem Stand der Technik bekannt, jedoch weisen die aus dem Stand der Technik bekannten Leerdosen keinen Informationsträger auf, so dass sie sich insofern von den erfindungsgemäßen Leerdosen unterscheiden. Die erfindungsgemäßen Leerdosen können beispielsweise Leerdosen aus Kunststoff zur Aufnahme von Wellrohren sein wie sie beispielsweise in der Bautechnik Verwendung finden, sind aber nicht beschränkt auf Leerdosen aus Kunststoff. So bezieht sich die Erfindung ebenfalls auf aus Metall gefertigte Leerdosen. Grundsätzlich ist die Verwendung einer Leerdose aus jedem Material denkbar, wie es beispielsweise in der Bautechnik bzw. der Elektroinstallation üblicherweise Verwendung findet. Die erfindungsgemäßen Leerdosen können beispielsweise Abzweigdosen, Schalterdosen und/oder Gerätedosen sein. Grundsätzlich ist jede in der Bautechnik bzw. der Elektroinstallation Verwendung findende Leerdose geeignet. Bei den erfindungsgemäßen Leerdosen kann es sich beispielsweise um Unterputzdosen handeln. Insbesondere betrifft die vorliegende Erfindung ein Verfahren zur Installation von Leerdosen. Weiterhin betrifft die vorliegende Erfindung ein System miteinander verknüpfter erfindungsgemäßer Leerdosen. Außerdem betrifft die vorliegende Erfindung ein System zur Aufnahme (elektrischer) Leitungen. Ferner betrifft die Erfindung auch ein Verfahren zur Einrichtung des erfindungsgemäßen Systems zur Elektrifizierung eines Gebäudes, wobei die erfindungsgemäßen, einen Informationsträger aufweisenden Leerdosen zum Einsatz kommen. Anhand des Informationsträgers ist mittels einer App eine computergestützte Kartierung der Leerdosen möglich. Daher betrifft die vorliegende Erfindung auch ein Verfahren zur Installation von einen Informationsträger aufweisenden Leerdosen sowie zur Identifikation der Leerdosen.

Leerdosen und Leerrohre finden üblicherweise in der Bautechnik insbesondere im Rohbau, unter Putz (UP), in Beton oder im Trockenbau Verwendung. Eine Mehrzahl Leerdosen wird üblicherweise über Leerrohre miteinander verbunden. Dabei dienen die Leerdosen beispielsweise als Verteilerpunkte bzw. Verteilerkästen zur Weiterleitung und Verteilung der Leerrohre oder aber auch als End-Dosen zur Aufnahme von Lichtschaltern oder Steckdosen. Durch die Verknüpfung wenigstens einer Leerdose mit einer Mehrzahl Leerrohren wird ein System beispielsweise zur Aufnahme elektrischer Leitungen oder Datenkabel erhalten über die die Elektrifizierung eines Gebäudes erfolgt. Somit wird der Stand der Technik durch das erfindungsgemäße System zur Aufnahme (elektrischer) Leitungen erheblich bereichert.

### Stand der Technik

Leerdosen und Leerrohre finden breite Verwendung in der Bautechnik. Besonders häufig kommen sie beispielsweise im Rahmen von Elektroinstallationsarbeiten bei der Errichtung von Neubauten zu Wohn- und gewerblichen Zwecken zum Einsatz. Leerdosen und Leerrohre bestehen meist aus einem thermoplastischen Kunststoff wie bspw. PVC. Alternativ, insbesondere bei anderen Einsatzgebieten als der Elektroinstallation, können Leerdosen und Leerrohre auch aus einem anderen Material als Kunststoff gefertigt sein, etwa Metall.

Die Herstellung kann beispielsweise mittels Spritzguss (häufig bei Leerdosen) oder Extrudieren (häufig bei Leerrohren) erfolgen, wobei jedoch auch andere aus dem Stand der Technik bekannte Herstellungsverfahren denkbar sind. In der Regel verfügen Leerdosen über vordefinierte Sollbruchstellen zum Herausbrechen einer Abdeckung oder Abdichtung. An Stellen, wo ein Leerrohr mit der Leerdose verbunden werden soll, wird eine Abdeckung herausgebrochen. Auf diese Weise eignen sich die Leerdosen dazu, individuell an ein vorgeplantes Elektroinstallationsnetz angepasst werden zu können und zugleich gegen das Eindringen von beispielsweise Beton oder anderen unerwünschten Substanzen abgedichtet zu sein.

Die Verwendung herkömmlicher Leerdosen weist jedoch mehrere voneinander unabhängige Nachteile auf. Unter anderem ist die Positionierung bzw. Verlegung der Leerdosen oft unnötig zeitaufwendig und fehlerbehaftet. Ebenso ist die Bestimmung der Position bereits verlegter Leerdosen nach weitergehenden Arbeiten wie beispielsweise Tapezierung schwierig und es kommt vor, dass Leerdosen nicht oder nur unter Schwierigkeiten aufgefunden werden. Andererseits kommt es vor, dass bei der Verwendung herkömmlicher Leerdosen einzelne Leerdosen bei der Installation vergessen werden, so dass diese fehlen. Das Beheben dieses Fehlers ist besonders kostspielig und zeitaufwändig, da er nur unter großen Mühen nachträglich korrigiert werden kann, indem beispielsweise die bereits fertige Wand oder eine vergossene Betondecke nachbearbeitet werden muss. Weiterhin besteht bei Verwendung der aus dem Stand der Technik bekannten Leerdosen nach deren Installation und dem Verputzen oder Betonieren von Wänden und Decken oder aber nach Abschluss von Trockenbauarbeiten, das Problem, dass häufig nicht bekannt ist, mit welchen anderen Leerdosen eine in der Wand befindliche Leerdose verbunden ist. Das ist insbesondere dann problematisch, wenn nachträglich Kabel durch die mit Leerrohren verbundenen Leerdosen als Verteilerpunkte bzw. Verteilerkästen gezogen werden sollen. Dies ist in besonderem Maße problematisch, wenn die Bestimmung über mehrere Räume (Küche, Wohnzimmer, Bad etc.) oder sogar Etagen (bspw. Keller bis Dachgeschoss) hinweg erfolgen soll.

Weiterhin weisen herkömmliche Leerdosen und Leerrohre den Nachteil auf, dass häufig nur unzureichend oder gar nicht bekannt ist, bzw. es sich nur sehr umständlich über mehrere Räume, Decken und/oder Wände hinweg, bestimmen lässt welchen Abstand mehrere Leerdosen zueinander haben, also wie groß der Abstand beispielsweise zwischen zwei Verteilerpunkten bzw. Verteilerkästen oder zwei offenen Leerrohrenden ist. Dies ist insbesondere auch dann ein Problem, wenn seit Errichtung eines Hauses mehrere Jahre vergangen sind und eine nachträgliche Anpassung der Elektrifizierung erfolgen soll. Beispielsweise, weil in einem Raum eine Steckdose, Lampe, etc. nachgerüstet werden soll, sodass für nachträglich einzuziehende Leitungen die notwendige Länge nicht oder nur sehr ungenau bekannt ist oder geschätzt werden muss. Diesem Problem wird herkömmlich damit begegnet, dass die elektrischen Leitungen unnötigerweise mit einem Überschuss gekauft werden, mit der Folge von nicht verwendbaren Abfällen. Oder aber, die elektrischen Leitungen stellen sich nach dem Einziehen als zu kurz heraus, was zusätzliche Arbeiten erforderlich macht, mit der Folge, dass die elektrischen Leitungen mit einem unnötigen Überschuss gekauft werden, womit man wieder beim zuvor beschrieben Fall landet.

Herkömmlicherweise wird der Abstand zweier Leerdosen indirekt bestimmt, indem eine Schnur, ein Band, ein Faden oder ein sonstiges geeignetes Material in eine erste Leerdose eingezogen wird und dann durch ein die Leerdosen verbindendes Leerrohr zu einer zweiten Leerdose geführt wird und die Länge der Schnur, des Bands, des Fadens oder des sonstigen geeigneten Materials bestimmt wird. Dieses Verfahren ist ungenau, sehr fehleranfällig und aufwendig.

Weiterhin ist aus dem Stand der Technik die Verwendung von elektronischen Markierungschips, beispielsweise RFID-Chips oder magnetischen Tags bekannt. Bei Leerrohren befinden sie sich in regelmässigem Abstand zueinander und die Längenmessung erfolgt durch das Durchlaufen dieser Markierungschips durch eine Messeinrichtung. Dieses Verfahren ist sehr aufwendig und durch die Verwendung der elektronischen Markierungschips sehr teuer. Darüber hinaus ist hier sehr nachteilig, dass die Auslesbarkeit dieser elektronischen Markierungschips nicht über die im Baugewerbe notwendigen langen Lebenszeiten von bis zu mehreren Dekaden garantiert werden kann.

### Beschreibung der Erfindung

Bei Elektroinstallationsarbeiten ist es oft notwendig, dass der Abstand zwischen zwei Leerdosen bestimmt werden muss. Auch kann es notwendig sein, dass der Abstand von einem offenen Ende eines Leerrohrs zu einer Leerdose bestimmt werden muss. Ebenso kann es notwendig sein, dass der Abstand zwischen zwei offenen Enden eines Leerrohres bestimmt werden muss. Optional kann sich in so einem Fall zwischen zwei offenen Enden eines Leerrohres eine Leerdose befinden. In so einem Fall sind zwei Leerrohre über eine Leerdose als Verteilerpunkt miteinander verbunden.

Eine Aufgabe der vorliegenden Erfindung ist es daher, eine Leerdose bereitzustellen, welche auf einfache und schnelle Weise zuverlässig verlegt und kartiert werden kann. Weiterhin ist es eine Aufgabe der vorliegenden Erfindung, eine Vorrichtung bereitzustellen, die es auf einfache und schnelle Weise zuverlässig ermöglicht, Leerdosen zu verlegen und zu kartieren. Ebenfalls ist es allgemein eine Aufgabe der vorliegenden Erfindung, ein System zur Aufnahme (elektrischer) Leitungen bereitzustellen, welches auf einfache und schnelle Weise zuverlässig verlegt und kartiert werden kann.

Die vorliegende Erfindung löst diese Aufgaben, indem eine erfindungsgemäße Leerdose, ein erfindungsgemäßes Leerrohr, eine Informationsträger-Verarbeitungsvorrichtung und ein System zur Aufnahme (elektrischer) Leitungen bereitgestellt werden. Somit ist die Lösung der Aufgaben durch die Merkmale der unabhängigen Ansprüche 1, 4, 6, 10, 14 und 15 definiert. Vorteilhafte Ausführungsformen sind jeweils Gegenstand der abhängigen Ansprüche.

Als Kartierung ist eine Zuordnung der vorgeplanten Position einer Leerdose und/oder eines Wellrohrs mit der Position einer positionierten Leerdose und/oder Wellrohr zu verstehen. Die Kartierung ermöglicht ein nachträgliches Abrufen der Positionen sowie eine Zuordnung der Positionen von Leerdose und/oder Leerrohr. Die Kartierung erfolgt mit der in der vorliegenden Erfindung beschriebenen Informationsträger-Verarbeitungsvorrichtung Diese Vorrichtung ermöglicht es, auch nach der Installation der Leerdosen und/oder Leerrohre über den Informationsträger eindeutig den Startpunkt und/oder den Zielpunkt und somit den Abstand zwischen zwei Leerdosen bzw. offenen Leerrohr-Enden zu bestimmen.

Erfindungsgemäß können Leerdose, die Vorrichtung zum Betreiben Informationsträger und optional das Wellrohr eine Einheit bilden, die im System zur Aufnahme (elektrischer) Leitungen verwirklicht wird. Allein aus Gründen der Übersichtlichkeit werden diese Bauteile bzw. Bestandteile im Folgenden gesondert erläutert, wobei es ganz selbstverständlich ist, dass sich die Merkmale miteinander kombinieren lassen.

Im Folgenden werden die Bestandteile des erfindungsgemäßen Systems näher erläutert.

### Leerdose

Die vorliegende Erfindung stellt eine Leerdose bereit, welche auf einfache Weise mit einer Informationsträger-Verarbeitungsvorrichtung eingelesen werden kann.

Ebenso ist der Einsatz der erfindungsgemäßen Leerdosen, sowie der mit (Informationsträger aufweisenden) Wellrohren verbundenen erfindungsgemäßen Leerdosen nicht nur in der Elektroinstallation möglich, sondern auch für Anwendungen in den Bereichen Heizung, Lüftung, Klima, Kühlung und oder Sanitär. Weiterhin können Leerdosen im Anlagen- oder Automobilbau vorgesehen sein. Dies gilt entsprechend für das hierin beschriebene erfindungsgemäße System zur Aufnahme (elektrischer) Leitungen.

Ein Vorteil der erfindungsgemässen Leerdose besteht darin, dass (beispielsweise nach der Installation der Leerdose in einem Rohbau) eindeutig die Position der Leerdose bestimmbar ist.

Die Leerdose weist einen Informationsträger auf. Bei dem Informationsträger kann es sich um einen bekannten Informationsträger handeln, wie beispielsweise einen optischen, elektronischen, und/oder magnetischen Informationsträger. Unter einem optischen Informationsträger soll insbesondere ein sichtbarer Informationsträger verstanden werden, d. h. ein Informationsträger, der mit dem menschlichen Auge und/oder mit Hilfe einer optischen Vorrichtung sichtbar ist. Beispiele für elektronische und/oder magnetische Informationsträger sind QR-Codes, RFIDs, etc, und allgemein Informationsträger mit einem ähnlichen Wirkprinzip.

Die Leerdose verfügt über Innenflächen und Außenflächen. Die Anzahl der Außenflächen und Innenflächen bestimmt sich danach, welche Grundform die Leerdose hat (quaderförmig, etc.). Die Grundform stellt hinsichtlich beispielhafter Ausführungsformen lediglich eine starke Abstraktion der tatsächlichen Form der Leerdose dar, da in der Praxis häufig beispielsweise Ausstülpungen/Einbuchtungen vorkommen. Ausstülpungen und Einbuchtungen haben beispielsweise den Zweck, die Außenfläche zu vergrößern um eine bessere Verzahnung mit Beton zu erzielen oder sie dienen der Aufnahme von Wellrohren. Die Anzahl der Außen-/Innenflächen sowie die Grundform ist dabei erfindungsunwesentlich und hat lediglich erläuternden Charakter. Der Fachmann entscheidet sich für eine Grundform Die Innenflächen bilden, meist zusammen mit einer entfernbaren Bodenplatte, einen Hohlraum. Die Außenflächen sind dazu vorgesehen, beispielsweise beim Gießen einer Decke mit Beton in Kontakt zu kommen. Durch den Einsatz der Leerdose wird der durch die Innenflächen gebildete Hohlraum vor dem Eindringen von Beton geschützt. Meist werden die Leerdosen mit der sichtbaren Außenfläche verlegt und anschließend beispielsweise in Beton eingegossen, oder aber sie werden in eine Wand eingearbeitet. Somit ist es zweckmäßig, dass wenigstens ein Informationsträger zumindest auf der Außenfläche angebracht ist. In einer weiteren Ausführungsform ist es bevorzugt, dass wenigstens ein Informationsträger jeweils auf der Innenfläche und der Außenfläche angebracht. Auf diese Weise lässt sich sowohl vor als auch nach der Installation der Informationsträger auslesen. Für die Ausführbarkeit der Erfindung ist es jedoch ausreichend, dass wenigstens ein Informationsträger auf einer Außenfläche angebracht ist. Grundsätzlich kann der wenigstens eine Informationsträger, an einer beliebigen Außen- oder Innenfläche angebracht sein. Bevorzugt ist die Anbringung an einer Boden- bzw. Deckenfläche, was die Einlesbarkeit erleichtert.

Das Material der Leerdose kann beispielsweise jedes geeignete Metall oder jeden geeigneten Kunststoff umfassen. Beispiele für geeignete Metalle sind etwa Edelstahl, Rostfreier Stahl und Kupfer. Beispiele für geeignete Kunststoffe sind etwa Polyamid (PA), Polyethylen (PE), Polypropylen (PP), Polytetrafluorethylen (PTFA) und Polyvinylchlorid (PVC). Ebenso sind Mischungen aus verschiedenen Materialien und Leerrohre mit und ohne Beschichtung geeignet. Grundsätzlich eignet sich jedes aus dem Stand der Technik für Leerdosen bekannte Material für den erfindungsgemäßen Einsatz.

In einer bevorzugten Ausführungsform ist das Material der Leerdose ausgewählt aus der Gruppe bestehend aus Polyamid (PA), Polyethylen (PE), Polypropylen (PP), Polytetrafluorethylen (PTFA), Polyvinylchlorid (PVC), Edelstahl, Rostfreier Stahl und Kupfer. Besonders bevorzugt ist die Verwendung von Kunststoff, so dass in einer besonders bevorzugten Ausführungsform das Material der Leerdose einen Kunststoff, bspw. Polyamid (PA), Polyethylen (PE), Polypropylen (PP), Polytetrafluorethylen (PTFA) und/oder Polyvinylchlorid (PVC) umfasst.

### Leerrohr

Das erfindungsgemäße Leerrohr kann aus jedem geeigneten Material bestehen. In einer bevorzugten Ausführungsform ist das Leerrohr ein Wellrohr. Ein Wellrohr ist ein Rohr aus starrem Material mit systematisch, bspw. wellenförmig wechselndem Durchmesser, wobei die Wellung dem Rohr eine Flexibilität verleiht. Für Elektroinstallationen werden bevorzugt Wellrohre aus Kunststoff verwendet.

Das Material des Leerrohrs kann beispielsweise jedes geeignete Metall oder jeden geeigneten Kunststoff umfassen. Beispiele für geeignete Metalle sind etwa Edelstahl, Rostfreier Stahl und Kupfer. Beispiele für geeignete Kunststoffe sind etwa Polyamid (PA), Polyethylen (PE), Polypropylen (PP), Polytetrafluorethylen (PTFA) und Polyvinylchlorid (PVC). Ebenso sind Mischungen aus verschiedenen Materialien und Leerrohre mit und ohne Beschichtung geeignet. Grundsätzlich eignet sich jedes aus dem Stand der Technik für Leerrohre bekannte Material für den erfindungsgemäßen Einsatz. Ebenfalls grundsätzlich eignet sich auch jedes aus dem Stand der Technik bekannte Leerrohr bspw. Wellrohr für den erfindungsgemäßen Einsatz.

In einer bevorzugten Ausführungsform ist das Material des Leerrohrs ausgewählt aus der Gruppe bestehend aus Polyamid (PA), Polyethylen (PE), Polypropylen (PP), Polytetrafluorethylen (PTFA), Polyvinylchlorid (PVC), Edelstahl, Rostfreier Stahl und Kupfer. Besonders bevorzugt ist die Verwendung von Kunststoff, so dass in einer besonders bevorzugten Ausführungsform das Material des Leerrohrs einen Kunststoff, bspw. Polyamid (PA), Polyethylen (PE), Polypropylen (PP), Polytetrafluorethylen (PTFA) und/oder Polyvinylchlorid (PVC) umfasst.

In einer bevorzugten Ausführungsform umfasst das Leerrohr wenigstens einen Informationsträger. Bevorzugt ist der Informationsträger ausgewählt aus der Gruppe bestehend aus alpha-nummerischen Zeichen, Barcodes und QR-Codes. Solche Informationsträger können besonders leicht hergestellt und aufgebracht werden. Ausserdem können sie besonders leicht gelesen werden. Alpha-numerische Zeichen sind Zeichen die aus einer Kombination von Ziffern und Buchstaben bestehen. Unter alpha-numerischen Zeichen sind auch solche Zeichen zu verstehen, die ausschließlich aus Ziffern oder ausschließlich aus Buchstaben bestehen. Demnach handelt es sich bei alpha-numerischen Zeichen um Zeichen die aus Ziffern und/oder Buchstaben kombiniert sind. Alternativ ist es auch möglich, die Informationsträger durch elektronische oder magnetische Informationsträger auszubilden.

Erfindungsgemäß umfasst das Leerrohr den Umfang des Leerrohres umlaufende und systematisch abwechselnde Erhebungen und Vertiefungen sowie Informationsträger in systematischen Abständen entlang der Länge des Leerrohres auf zumindest einer Erhebung des Leerrohres.

Der am Leerrohr angebrachte Informationsträger ist so eingerichtet, dass er, egal wie das Leerrohr positioniert ist, gelesen werden kann. So befinden sich in einer Ausführungsform des Leerrohrs im Abschnitt eines Umfangs bspw. vier identische Informationsträger im Abstand von 90° zueinander. In einer anderen bevorzugten Ausführungsform des Leerrohrs befinden sich im Abschnitt eines Umfangs bspw. drei identische Informationsträger im Abstand von 120° zueinander.

Damit kann der vorhandene Platz optimal genutzt werden. Zudem sind derart angeordnete Informationsträger für den Benutzer einfacher zu lesen. Außerdem handelt es sich dabei um eine materialsparende Anbringungsvariante, da der Informationsträger nur eine kleine Fläche beansprucht und dennoch optimal verarbeitet werden kann.

### Informationsträger

Die Informationsträger können gebildet werden durch von einem Menschen ohne weitere Hilfsmittel visuell erfassbare alpha-nummerische Angaben, z.B. Zeichen aus dem ASCII-Code oder Zahlen im Binär- oder Dezimalsystem. Weiterhin können die Informationsträger gebildet werden durch maschinenlesbare Darstellungen wie z.B. bekannte Bar-Codes oder QR-Codes oder eine Kombination daraus. In besonders bevorzugter Ausführungsform werden visuell erfassbare und maschinenlesbare Informationsträger auf den jeweiligen Flächen miteinander kombiniert. So kann erfindungsgemäss in direkter Nähe zu einem Bar-Code eine alpha-nummerische Angabe (z.B. eine Zahl) abgebildet sein, sodass eine Information des Informationsträgers damit entweder durch einen Menschen ohne weitere Hilfsmittel oder mittels Maschinen ausgelesen werden kann.

Somit kann ein Benutzer entweder ohne weitere Hilfsmittel oder mit einer Informationsträger-Verarbeitungsvorrichtung mit einfachen Mitteln sämtliche relevanten Informationen erhalten.

Der Informationsträger kann auch als eindeutige Kennzeichnung des Rohres dienen, beispielsweise als Chargennummer oder als Merkmal für den Produktionszeitpunkt. Weiterhin kann der Informationsträger eine Information über weitere Wellrohreigenschaften tragen, beispielsweise über das verwendete Material / Kunststoffmaterial, über Zuschlagsstoffe zur Brandhemmwirkung, Durchmesser, Wandstärke etc.

Die auf den Leerdosen und optional dem Wellrohr angebrachten Informationsträger erlauben eine nachträgliche Identifikation derselben auch zwischen einem Startpunkt und Zielpunkt, beispielsweise bei späterer Öffnung der Gebäudewand zu Umbau- oder Reparaturmassnahmen.

### Herstellungsverfahren für Informationsträger aufweisende Leerdosen und/oder Wellrohre

Die Informationsträger können erfindungsgemäss auf die Leerdose und gegebenenfalls das Wellrohr in verschiedener Weise aufgebracht werden. In einer Ausführungsform werden die Informationsträger durch Prägewerke, bevorzugt beheizte Prägewerke, besonders bevorzugt automatische beheizte Nummerierprägewerke aufgebracht. Erfindungsgemäss ist vorgesehen, die Informationsträger durch Druckverfahren aufzubringen, bevorzugt durch Druckverfahren, bei denen die Farben besondere Zuschlagsstoffe wie Metallpartikel oder UV-Marker aufweisen. Erfindungsgemäss ist vorgesehen, dass die Informationsträger durch Ätzen aufgebracht werden. Besonders bevorzugt ist erfindungsgemäss vorgesehen, die Informationsträger durch Lasermarkierung aufzubringen.

Somit betrifft ein weiterer Aspekt der Erfindung ein Verfahren zum Herstellen einer erfindungsgemässen Leerdose. Ein anderer Aspekt betrifft ein Verfahren zum Herstellen eines erfindungsgemäßen Leerrohrs. Der wenigstens eine Informationsträger wird auf die Leerdose bzw. das Leerrohr aufgeprägt, aufgedruckt, oder durch Lasermarkierung aufgebracht.

In einer Ausführungsform weisen die Informationsträger einer Charge an Leerdosen bzw. die in regelmäßigen Abständen an einem Leerrohr angebrachten Informationsträger fortlaufende Informationen auf. Beispielsweise weist der erste Informationsträger einer Leerdose einer Charge bzw weisen die Informationsträger eines ersten Längenabschnittes des erfindungsgemässen Wellrohrs die Endziffer "1" oder "A" auf, während die Informationsträger eines zweiten Längenabschnittes des erfindungsgemässen Wellrohrs die Endziffer "2" oder "B" aufweisen, und während die Informationsträger eines dritten Längenabschnittes des erfindungsgemässen Wellrohrs die Endziffer "3" oder "C" aufweisen.

Beispielsweise wird ein QR-Code in vorteilhafter Weise mit einem Tintenstrahlverfahren oder durch Lasermarkierung aufgebracht. Gleichsam wird ein Bar-Code in vorteilhafter Weise mit einem Tintenstrahlverfahren oder durch Lasermarkierung aufgebracht.

Das Anbringen des wenigstens einen Informationsträgers erfolgt bevorzugt beispielsweise im Anschluss an ein Spritzgussverfahren (bei Leerdosen) oder im Anschluss an ein Extrusionsverfahren (bei Leerrohren). Es ist aber auch denkbar, dass das Anbringen des wenigstens einen Informationsträgers beispielsweise direkt in das jeweilige Herstellungsverfahren integriert wird.

Vorteilhafterweise werden alle Informationsträger auf das Wellrohr aufgeprägt, aufgedruckt oder durch Lasermarkierung aufgebracht. Grundsätzlich ist der Informationsträger auf jeder aus dem Stand der Technik bekannten Leerdose und auf jedem aus dem Stand der Technik bekannten Leerrohr anbringbar.

Das erfindungsgemässe Herstellerverfahren erlaubt eine automatisierte und kostengünstige Herstellung der erfindungsgemässen Leerdosen und Wellrohre.

### Informationsträger-Verarbeitungsvorrichtung

Der auf der Leerdose und, sofern vorhanden, auf dem Wellrohr angebrachte Informationsträger ist dazu eingerichtet, mit einer Informationsträger-Verarbeitungsvorrichtung betrieben zu werden. Die Informationsträger-Verarbeitungsvorrichtung umfasst eine Informationsträger-Leseeinrichtung, einen Speicher eingerichtet zum Speichern der ausgelesenen Informationen und eine Recheneinheit eingerichtet zum Ausführen einer Applikations-Software auf.

Die erfindungsgemässe Vorrichtung kann beispielsweise als ein Smartphone ausgebildet sein. Ein solches Smartphone verfügt üblicherweise über eine oder mehrere Kameras, mit der der Informationsträger der Leerdose ausgelesen werden kann. Es verfügt ebenfalls über einen Speicher, in dem die ausgelesenen Informationen gespeichert werden können. Zudem kann das Smartphone über eine Schnittstelle verfügen, über die Daten von oder zu einem CAD-Planungstool übertragen werden können, wie insbesondere Positionsdaten der Leerdosen. Ausserdem ist der Speicher eines Smartphones geeignet, eine Applikations-Software zu speichern. Diese Applikations-Software kann dann auf einer Recheneinheit des Smartphones ausgeführt werden, wodurch vorgeplante Positionsdaten einer Leerdose mit Hilfe des an einer positionierten Leerdose angebrachten Informationsträgers zugeordnet werden können. Hierdurch lässt sich die Position einer oder mehrerer Leerdosen sowie der Abstand einer Leerdose von einer anderen Leerdose bestimmen.

Dabei kann eine Informationsträger-Leseeinrichtung ein QR-Code bzw. ein Bar-Code Scanner sein, auch im einfachsten Fall die Kamera eines Smartphones mit einer entsprechenden auf dem Smartphone installierten Softwareapplikation. Denkbar ist z.B., dass es sich um einen Handscanner handelt, der bspw. per Bluetooth mit einem Smartphone verbunden ist. Das Einlesen des Informationsträgers kann dabei durch einfaches Fotografieren bzw. Scannen erfolgen.

Des Weiteren kann die erfindungsgemässe Vorrichtung über eine Datenschnittstelle zu einer Datenbank verfügen. Für jeden Informationsträger können die zugehörigen Produktionsdaten wie beispielsweise Chargennummer, Herstelldatum, Länge des Rohrs, Material, Farbe, Herstellverfahren an die erfindungsgemässe Informationsträger-Verarbeitungsvorrichtung übermittelt und dort gespeichert werden.

Dies hat den Vorteil, dass solche Informationen nicht zusätzlich zu einer fortlaufenden Information in den Informationsträgern enthalten sein brauchen oder anderweitig auf der Leerdose und/oder dem Wellrohr angeordnet werden müssten.

Es ist auch möglich, dass die Informationsträger-Verarbeitungsvorrichtung zusätzlich oder ausschliesslich eine Datenschnittstelle zu einem Server aufweist, der wiederum Schnittstellen zu einer Datenbank des Herstellers der Leerdose und/oder des Leerrohrs aufweist sowie zu einem CAD-Planungstool eines Planers, in dem alle Verlege- und Verwendungsdaten der Leerdose und/oder des Leerrohrs vorhanden sind.

Die Applikations-Software ist dazu ausgebildet, dass ein erfindungsgemässes Verfahren zum Betreiben der Leerdose und optional des Leerrohrs auf der erfindungsgemässen Vorrichtung durchgeführt werden kann.

Vorteilhafterweise verfügt die Vorrichtung daher auch über eine Anzeige- und eine Eingabevorrichtung. Die Anzeige- und die Eingabevorrichtung kann vorteilhafterweise als ein Touch-Display ausgebildet sein. Beispielsweise kann das Eingeben der bereits zuvor erhaltenen Informationen über die Position der Leerdose und/oder des Leerrohrs mittels der Eingabevorrichtung erfolgen, so dass bspw. eine Touch-Zuordnung der ausgewählten Position einer Leerdose und/oder eines Leerrohrs mit einer installierten Leerdose bzw. eines Leerrohrs erfolgt. Das Dokumentieren der Informationen und optional weiterer Notizen kann durch Speichern im Speicher der Vorrichtung erfolgen.

Es ist weiterhin möglich, dass die Informationsträger-Verarbeitungsvorrichtung bei der Durchführung eines Verfahrens zum Betreiben einer einen Informationsträger aufweisenden Leerdose und/oder zum Betreiben eines Systems zur Aufnahme elektrischer Leitungen fertig verlegte Leerdosen und/oder Leerrohre auf einem Display der Vorrichtung durch ein optisches Signal als erfolgreich bearbeitet anzeigt und/oder ein akustisches Signal ausgibt. Beispielsweise können erfolgreich verlegte Leerdosen und/oder Leerrohre auf dem Display grün angezeigt werden und/oder es erscheint ein Piepton.

### System zur Aufnahme (elektrischer) Leitungen

Außerdem betrifft die vorliegende Erfindung ein System zur Aufnahme (elektrischer) Leitungen, insbesondere ein System zur Aufnahme (elektrischer) Leitungen in einem Gebäude. Bei dem erfindungsgemäßen System handelt es sich um eine Infrastruktur umfassend wenigstens eine erfindungsgemäße Leerdose und wenigstens ein Wellrohr, bevorzugt ein Informationsträger aufweisendes Wellrohr, welches mit der Leerdose verbunden ist. Diese Infrastruktur ist dazu vorgesehen, mit elektrischen Leitungen durchzogen zu werden. Das System umfasst eine oder mehrere erfindungsgemäße wenigstens einen Informationsträger aufweisende Leerdosen und Leerrohre, insbesondere Wellrohre. In einer besonders bevorzugten Ausführungsform umfasst das System eine oder mehrere erfindungsgemäße wenigstens einen Informationsträger aufweisende Leerdosen und Informationsträger aufweisende Wellrohre.

Mit dem erfindungsgemässen System zur Aufnahme (elektrischer) Leitungen ist es in Anwendung des erfindungsgemässen Verfahrens zum Betreiben eines Systems zur Aufnahme (elektrischer) Leitungen möglich, benötigte Abstände (Dose zu Dose, erstes offene Ende eines Leerrohrs zu zweitem offenen Ende eines Leerrohrs, Dose zu offenem Ende eines Leerrohrs) während und auch nach der Installation zu bestimmen. Dies erfolgt über das Ablesen der Informationsträger an einem gewählten ersten Punkt sowie über das Ablesen der Informationsträger an einem gewählten zweiten Punkt. So lassen sich beispielsweise in einem Verteilerkasten im Keller oder in der Küche eines Gebäudes, der entsprechende Informationsträger und weitere Informationsträger, die an offenen Enden von Leerrohren oder an Leerdosen angebracht sind, auslesen. Diese Informationen können anschliessend gespeichert werden, beispielsweise in einer Datenbank oder im Planungswerkzeug des Gebäudes. Damit stehen sie für weitere Planungs- oder Installationsarbeiten zur Verfügung.

### Verfahren zum Betreiben einer wenigstens einen Informationsträger aufweisenden Leerdose sowie Verfahren zum Betreiben eines Systems zur Aufnahme (elektrischer) Leitungen

Ein weiterer Aspekt der Erfindung betrifft ein Verfahren zum Betreiben einer erfindungsgemässen Leerdose. In einem weiteren Apsekt bezieht sich die Erfindung auf ein Verfahren zum Betreiben eines Systems zur Aufnahme (elektrischer) Leitungen.

Hierzu umfasst das Verfahren den Schritt des Auslesens eines Informationsträgers der Leerdose und/oder des Leerrohrs.

Vorteilhafterweise wird dabei ein Informationsträger eines ersten Längenabschnitts des Leerrohrs ausgelesen, der sich beispielsweise an einem Anfang des Leerrohrs befindet. Damit kann ein Startpunkt des Leerrohrs bestimmt werden.

In einer besonderen Ausführungsform umfasst das Verfahren zum Betreiben einer wenigstens einen Informationsträger aufweisenden Leerdose bzw. das Verfahren zum Betreiben eines Systems zur Aufnahme (elektrischer) Leitungen zusätzlich den Schritt des Auslesens eines zweiten Informationsträgers des Leerrohrs, und insbesondere auch den Schritt des Berechnens der Länge des Leerrohrs.

Vorteilhafterweise wird dabei ein zweiter Informationsträger des Leerrohrs ausgelesen, der sich beispielsweise an einem Ende des Wellrohrs befindet, bei dem ein erster Informationsträger des Leerrohrs gelesen wurde, der sich an einem Anfang des Wellrohrs befindet.

Wenn der Abstand zweier Leerdosen oder wenn die Länge eines Leerrohrs bekannt ist, kann die Länge eines einzuziehenden Kabels oder einer einzuziehenden Leitung in das Leerrohr gut abgeschätzt werden, was eine vorgängige Konfektionierung solcher Leitungen oder Kabel ermöglicht.

In einer weiteren besonderen Ausführungsform umfasst das Verfahren zum Betreiben einer wenigstens einen Informationsträger aufweisenden Leerdose sowie das Verfahren zum Betreiben eines Systems zur Aufnahme (elektrischer) Leitungen zusätzlich den Schritt des Speicherns der Informationen der ausgelesenen Informationsträger, und den Schritt des Zuordnens der Informationsträger zu einer Position der Leerdose bzw. zu jeweils einem Startpunkt und einem Zielpunkt eines Leerrohrs.

Damit ist es möglich, den Informationsträgern die Position einer Leerdose bzw. einen Startpunkt oder einen Zielpunkt eines Leerrohrs zuzuordnen, bzw. umgekehrt. Ferner ist es möglich, die Länge dieses Leerrohrs zu bestimmen.

Der Schritt des Zuordnens der Informationsträger zu einer Position einer Leerdose und/oder zu jeweils einem Startpunkt und einem Zielpunkt eines Leerrohrs umfasst vorteilhafter Weise den Schritt des Austauschens von Daten mit einem CAD Planungstool.

In einer weiteren besonderen Ausführungsform umfasst das Verfahren zum Betreiben einer wenigstens einen Informationsträger aufweisenden Leerdose sowie das Verfahren zum Betreiben eines Systems zur Aufnahme (elektrischer) Leitungen zusätzlich den Schritt des Zuordnens der Position der Informationsträger zu der ausgelesenen Information des jeweiligen Informationsträgers.

Dies ermöglicht zum einen eine Zuordnung jeder Position einer Leerdose und von jedem offenen Ende eines Leerrohrs zu einem Raum in einem Gebäude, oder sogar zu einer bestimmten Stelle in einem Raum in einem Gebäude, wie beispielsweise einem Verteilerkasten, einer Abzweigdose, einem Schalter, oder einer Steckdose. Zum anderen ist eine Zuordnung eines Nutzungsträgers oder einer Art eines Nutzungsträgers zu einer Leerdose bzw. einem Leerrohr möglich, also eine Zuordnung von Energie wie beispielsweise Strom oder eine Zuordnung einer Datenverbindung wie beispielsweise LAN zu einer Leerdose bzw. einem Leerrohr.

Auch dieser Schritt des Zuordnens der Position der Informationsträger zu der ausgelesenen Information des jeweiligen Informationsträgers umfasst vorteilhafter Weise den Schritt des Austauschens von Daten mit einem CAD Planungstool.

In einer weiteren besonderen Ausführungsform umfasst das Verfahren zum Betreiben einer wenigstens einen Informationsträger aufweisenden Leerdose sowie das Verfahren zum Betreiben eines Systems zur Aufnahme (elektrischer) Leitungen zusätzlich den Schritt des Verlängerns eines Leerrohrs bzw. das Verbinden einer Leerdose mit einem Leerrohr.

Dies hat den Vorteil, dass beispielsweise ein bereits begonnenes Verlegen einer Leerdose und/oder eines Leerrohrs fortgesetzt werden kann, auch wenn sich zwischenzeitlich herausstellen sollte, dass eine Leerdose bspw. defekt ist oder ein Teil eines Leerrohrs mit dem das Verlegen begonnen wurde, bspw. aufgrund eines Defekts gekürzt werden musste und die Länge nicht ausreicht.

Vorteilhafter Weise verfügt das Verfahren zum Betreiben einer wenigstens einen Informationsträger aufweisenden Leerdose bzw. das Verfahren zum Betreiben eines Systems zur Aufnahme (elektrischer) Leitungen auch über den Schritt des Zusammenfügens von unterschiedlichen Leerdosen und/oder Wellrohren. Dies ist beispielsweise vorteilhaft, wenn mehrere Leerdosen und/oder Leerrohre verlegt werden und miteinander verbunden werden sollen und dies beispielsweise von zwei verschiedenen Startpunkten geschieht, die dann an einem gemeinsamen Treffpunkt miteinander verbunden werden, also zusammengefügt werden sollen.

Vorteilhafter Weise verfügt das Verfahren zum Betreiben einer wenigstens einen Informationsträger aufweisenden Leerdose bzw. das Verfahren zum Betreiben eines Systems zur Aufnahme (elektrischer) Leitungen auch über die Möglichkeit, eine Vielzahl von Daten einer Leerdose und/oder eines Leerrohrs zu dokumentieren, insbesondere zu speichern, wie beispielsweise die Position der Leerdose, den Abstand zu einer weiteren Leerdose, die Länge eines mit einer Leerdose verbundenen Leerrohrs, Notizen zur Leerdose und/oder zum Leerrohr, die Historie von Leerdose und Leerrohr (Logbuchfunktion), den Status (wie beispielsweise "geplant", "in Arbeit" oder "fertiggestellt"). Solche Informationen können ganz oder teilweise auch an das CAD-Planungstool übermittelt werden, so dass fertig verlegte Leerdosen und/oder Leerrohre im Plan auf dem CAD-Planungstool beispielsweise grün dargestellt werden können. Es ist aber auch möglich, die Planungsdaten von dem CAD-Planungstool derart an eine Vorrichtung zum Durchführen des Verfahrens zu übermitteln, dass fertig verlegte Leerdosen und/oder Leerrohre auf einem Display der Vorrichtung durch ein optisches Signal als erfolgreich bearbeitet angezeigt werden und/oder ein akustisches Signal ausgegeben wird. Beispielsweise können erfolgreich verlegte Leerdosen und/oder Leerrohre auf dem Display grün angezeigt werden und/oder es erscheint ein Signalton.

Die Positionsdaten und/oder der Nutzungsträger oder die Nutzungsträgerart können auch von dem CAD-Planungstool übermittelt werden. Es ist aber auch möglich, die Position eines Informationsträgers händisch in eine Vorrichtung zur Durchführen des Verfahrens einzugeben oder anhand einer in der Nähe des Informationsträgers angeordneten Positionsmarkierung einzulesen.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung der Ausführungsbeispiele verwendeten Zeichnungen zeigen:
- Fig. 1:: erfindungsgemässe Leerdose;
- Fig. 2:: erfindungsgemäßes Leerrohr mit Barcodes; und
- Fig. 3:: erfindungsgemäßes System zur Aufnahme (elektrischer) Leitungen

Grundsätzlich sind in den Figuren gleiche Teile mit gleichen Bezugszeichen versehen.

### Exemplarische Ausführungsformen

### Informationsträger aufweisende Leerdose

In einer beispielhaften Ausführungsform umfasst die Leerdose einen Informationsträger auf einer Außenfläche. In einer bevorzugten Ausführungsform umfasst die Leerdose einen Informationsträger sowohl auf der Innen- als auch auf der Außenfläche. Bei dem Informationsträger handelt es sich um einen QR-Code. Dabei sind die auf dem Informationsträger gespeicherten Informationen für Innen- und die Außenfläche identisch, also in dem Sinne, dass der QR-Code für die Außen- und Innenfläche identisch ist. Sie unterscheiden sich jedoch im Rahmen der von dem gewählten Informationsträger gesetzten Möglichkeiten von Informationen, die auf Informationsträgern weiterer Leerdosen angebracht sind.

### Informationsträger aufweisendes Leerrohr

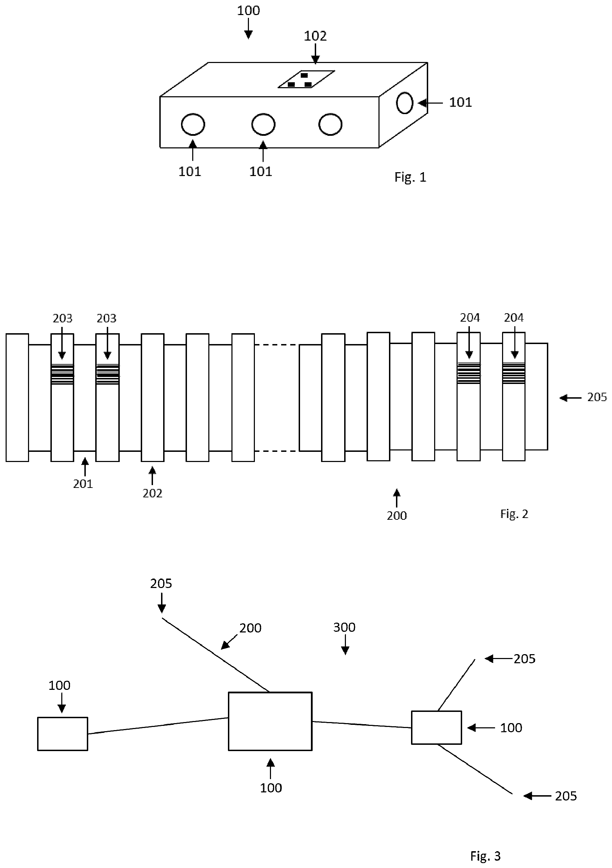

In einer beispielhaften Ausführungsform umfasst das Leerrohr entlang seiner Länge in regelmäßigen Abständen von 50 cm einen Informationsträger auf einer Erhöhung seiner Außenfläche (Figur 2). Bei dem Informationsträger handelt es sich um einen Barcode. Bezugnehmend auf das Zentrum eines durch den Umfang einer Erhöhung der Außenfläche gebildeten Kreises ist ein weiterer identischer Barcode in einem Winkel von 120° angebracht. Die in regemäßigen Abständen entlang der Länge des Wellrohrs angebrachten Barcodes unterscheiden sich systematisch im Rahmen der von dem gewählten Informationsträger gesetzten Möglichkeiten voneinander, und sind so eingerichtet, dass sich anhand einer Datenbank bestimmen lässt, welchen Abstand zwei eingelesene Barcodes voneinander haben. Wird beispielsweise der zweite und siebte Barcode mit einer Lesevorrichtung eingelesen, kann anhand der hinterlegten Informationen der Abstand von 3 m bestimmt werden.

### System zur Aufnahme elektrischer Leitungen in einem Gebäude

In einer exemplarischen Ausführungsform wird das System zur Elektrifizierung eines Gebäudes zunächst am Computer vorgeplant. Als Ergebnis erhält der Benutzer CAD-Daten über das vorgeplante System zur Elektrifizierung eines Gebäudes. Diese CAD-Daten werden über eine Schnittstelle an eine Applikationssoftware (App) auf einem Smartphone übertragen. Der Benutzer startet auf einem Smartphone die Applikationssoftware und erhält als graphische Ausgabe eine interaktive Karte des am Computer vorgeplanten Systems. Gemäß der Karte überträgt der Benutzer die vorgeplanten Positionen der Leerdosen auf den Arbeitsort, so dass er weiss, wo im darauffolgenden Schritt die Leerdosen zu positionieren sind. Der Benutzer positioniert am Arbeitsort eine Leerdose an einer vorgeplanten Position. Durch Touch-Auswahl in der Applikationssoftware wählt er eine Position für das Platzieren einer Leerdose, so dass sich die Position der positionierten Leerdose am Arbeitsort und die Position der in der Applikationssoftware ausgewählten Dose entsprechen. Nun liest er mittels einer Kamera des Smartphones den QR-Code der Leerdose ein, wodurch eine Zuordnung der vorgeplanten Position der Leerdose zur am Arbeitsort positionierten Leerdose erfolgt. In der Applikationssoftware wird die entsprechende vorgeplante Position als erfolgreich bearbeitet gespeichert und dem Benutzer entsprechend ausgegeben. Der Vorgang wird wiederholt, bis alle vorgeplanten Positionen als erfolgreich bearbeitet gespeichert sind.

In einer weiteren exemplarischen Ausführungsform wird das System zur Elektrifizierung eines Gebäudes zunächst am Computer vorgeplant. Als Ergebnis erhält der Benutzer CAD-Daten über das vorgeplante System zur Elektrifizierung eines Gebäudes. Diese CAD-Daten werden über eine Schnittstelle an eine Applikationssoftware (App) auf einem Smartphone übertragen. Der Benutzer startet auf einem Smartphone die Applikationssoftware und erhält als graphische Ausgabe eine interaktive Karte des am Computer vorgeplanten Systems. Gemäß der Karte überträgt der Benutzer die vorgeplanten Positionen der Leerdosen und Wellrohre auf den Arbeitsort, so dass er weiss, wo im darauffolgenden Schritt die Leerdosen und Wellrohre zu positionieren sind. Der Benutzer positioniert am Arbeitsort eine Leerdose an einer vorgeplanten Position und verbindet ein einen Informationsträger aufweisendes Wellrohr mit der Leerdose. Durch Touch-Auswahl in der Applikationssoftware wählt er eine Position für das Platzieren einer Leerdose, so dass sich die Position der positionierten Leerdose am Arbeitsort und die Position der in der Applikationssoftware ausgewählten Dose entsprechen. Nun liest er mittels einer Kamera des Smartphones den QR-Code der Leerdose ein, wodurch eine Zuordnung der vorgeplanten Position der Leerdose zur am Arbeitsort positionierten Leerdose erfolgt. Sodann liest er einen am Wellrohr angebrachten Informationsträger, der sich am nächsten zu der zuvor eingelesenen Leerdose befindet, mit der Kamera aus. In der Applikationssoftware wird die entsprechende vorgeplante Position als erfolgreich bearbeitet gespeichert und dem Benutzer entsprechend ausgegeben. Der Vorgang wird wiederholt, bis alle vorgeplanten Positionen als erfolgreich bearbeitet gespeichert sind.

### Bezugszeichenliste

Figur 1:
   Leerdose 100
   Öffnung mit entfernbarer Abdeckung 101
   Informationsträger 102
Figur 2:
   Leerrohr 200
   Vertiefung 201
   Erhebung 202
   Erster Informationsträger 203
   Zweiter Informationsträger 204
   Offenes Ende eines Leerrohrs 205
Figur 3:
   System zur Aufnahme (elektrischer) Leitungen 300
   Leerdose 100
   Leerrohr 100
   Offenes Ende eines Leerrohrs 205

## Patentansprüche

1. Verfahren zur Verwendung einer einen Informationsträger (102) aufweisenden Leerdose (100) und/oder zum Betreiben eines Systems zur Aufnahme elektrischer Leitungen (300) umfassend die Schritte:
- optional Planung einer Leerdose (100) an wenigstens einer vorbestimmten Position
- Laden der wenigstens einen vorbestimmten Position für eine Leerdose (100) in eine App,
- Positionieren einer Leerdose (100) an einer vorbestimmten Position, wobei die Leerdose (100) wenigstens einen Informationsträger (102) umfasst,
- Auswählen einer vorbestimmten Position für eine Leerdose (100) in der App,
- Einlesen des Informationsträgers (102) der entsprechend positionierten Leerdose (100) mittels einer Informationsträger-Verarbeitungsvorrichtung,
- optional Positionieren und Verbinden eines Leerrohrs (200) mit der Leerdose (100) und Einlesen des mit der Leerdose (100) verbundenen Leerrohrs (200) mittels der Informationsträger-Verarbeitungsvorrichtung,
- optionale Ausgabe eines optischen und/oder akustischen Signals für fertig eingelesene Leerdosen (100) und/oder Leerrohre.

2. Verfahren zum Betreiben einer einen Informationsträger (102) aufweisenden Leerdose (100) und/oder zum Betreiben eines Systems zur Aufnahme elektrischer Leitungen (300) nach Anspruch 1,
weiterhin umfassend die Schritte:
- Auslesen eines Informationsträgers (102) einer ersten Leerdose (100) oder eines ersten Informationsträgers (102) eines Leerrohrs (200) und eines Informationsträgers (102) einer zweiten Leerdose (100) oder eines zweiten Informationsträgers (102) eines Leerrohrs (200), und insbesondere
- Berechnen des Abstands einer ersten Leerdose (100) zu einer zweiten Leerdose (100) und/oder Berechnen der Länge eines Leerrohrs (200) und/oder Berechnen des Abstands einer Leerdose (100) zu einem offenen Ende eines Leerrohrs (205).

3. Verfahren zum Betreiben einer einen Informationsträger (102) aufweisenden Leerdose (100) und/oder zum Betreiben eines Systems zur Aufnahme elektrischer Leitungen (300) nach Anspruch 1 oder 2,
zusätzlich umfassend die Schritte:
- Speichern der Informationen der ausgelesenen Informationsträger, und
- Zuordnung der Informationsträger (102) zur Position einer Leerdose (100) und/oder zu den offenen Enden eines Leerrohrs (205) und/oder zur Position an der eine Leerdose (100) mit einem Leerrohr (200) verknüpft ist.

4. Informationsträger-Verarbeitungsvorrichtung zur Durchführung eines Verfahrens gemäss einem der Ansprüche 1 bis 3, umfassend
- eine Informationsträger-Leseeinrichtung zum Lesen der auf dem Informationsträger (102) gespeicherten Informationen, und
- einen Speicher zum Speichern der ausgelesenen Informationen, und
- eine Recheneinheit ausgebildet zum Zuordnen der Position einer Leerdose (100) und/oder den offenen Enden eines Leerrohrs (205) und/oder den Positionen, an denen eine Leerdose (100) mit einem Leerrohr (200) verknüpft ist, wobei die Recheneinheit außerdem dazu ausgebildet ist, die Abstände zwischen Leerdosen (100) und/oder den offenen Enden eines Leerrohrs (205) zu bestimmen, und
- optional eine Einheit zur Ausgabe eines optischen und/oder akustischen Signals.

5. Informationsträger-Verarbeitungsvorrichtung nach Anspruch 4, wobei die Recheneinheit dazu eingerichtet ist, das Zuordnen der Position einer Leerdose (100) und/oder den offenen Enden eines Leerrohrs (205) und/oder den Positionen, an denen eine Leerdose (100) mit einem Leerrohr (200) verknüpft ist und/oder die Bestimmung der Abstände zwischen Leerdosen (100) und/oder den offenen Enden eines Leerrohrs (205) anhand der ausgelesenen und gespeicherten Informationen durchzuführen.

6. Leerdose (100) zur Verwendung in einem Verfahren nach einem der Ansprüche 1 bis 3.

7. Leerdose (100) nach Anspruch 6, wobei der Informationsträger (102) auf einer Innenfläche und/oder Außenfläche angebracht ist.

8. Leerdose (100) nach einem der Ansprüche 6 oder 7, wobei der Informationsträger (102) einen QR-Code und/oder einen Barcode umfasst.

9. Leerdose (100) nach einem der Ansprüche 6 oder 7, wobei der Informationsträger (102) ein QR-Code ist.

10. Leerrohr (200) zur Verwendung in einem Verfahren nach einem der Ansprüche 1 bis 3.

11. Leerrohr (200) nach Anspruch 10, umfassend
den Umfang des Leerrohres umlaufende und sich systematisch in Längenrichtung des Leerrohrs (200) wiederholende Erhebungen (202) und Vertiefungen (201), und
wobei mehrere Informationsträger (102) in systematischen Abständen entlang der Länge des Leerrohrs (200) auf jeweils zumindest einer Erhebung (202) des Leerrohres (200) angebracht sind.

12. Leerrohr (200) nach einem der Ansprüche 10 oder 11,
wobei der Abstand eines ersten Informationsträgers (102) zu einem zweiten Informationsträger (102) 5 cm bis 50 cm beträgt, bevorzugt 5 cm bis 25 cm beträgt, besonders bevorzugt 5 bis 15 cm beträgt, ganz besonders bevorzugt 10 cm beträgt und insbesondere bevorzugt 5 cm beträgt, und/oder
wobei der jeweils auf einer Erhebung (202) angebrachte Informationsträger (102) bezogen auf den Umfang der Erhebung (202) vollflächig aufgebracht ist, bevorzugt weniger als 75 % der Fläche des Umfangs bedeckt, stärker bevorzugt weniger als 50 % der Fläche des Umfangs bedeckt, am stärksten bevorzugt weniger als 33 % der Fläche des Umfangs bedeckt und insbesondere weniger als 25 % der Fläche des Umfangs bedeckt.

13. Leerrohr (200) nach einem der Ansprüche 11 bis 12, wobei der Informationsträger (102) bezogen auf den Umfang mit Unterbrechungen aufgebracht ist und wobei der Winkel zwischen zwei Unterbrechungen des Informationsträgers (102) bezogen auf das Zentrum des Leerrohrquerschnitts 10° bis 350°, bevorzugt 180°, stärker bevorzugt 120°, noch stärker bevorzugt 90° beträgt.

14. System zur Aufnahme elektrischer Leitungen (300), umfassend
ein oder mehrere Leerdosen (100) nach einem der Ansprüche 6 bis 9, und ein oder mehrere Leerrohre (200), wobei die Leerrohre (200) optional nach einem der Ansprüche 10 bis 13 ausgebildet sind.

15. Verfahren zum Herstellen einer Leerdose (100) nach einem der Ansprüche 1 bis 4 und/oder eines Leerrohrs (200) nach einem der Ansprüche 5-8, wobei der wenigstens eine Informationsträger (102) auf die Leerdose (100) und/oder das Wellrohr aufgeprägt, aufgedruckt, oder durch Lasermarkierung aufgebracht wird.
